(19) Europäisches Patentamt
European Patent Office
Office européen des brevets

(11) EP 2 936 099 B1

(12) EUROPEAN PATENT SPECIFICATION

(45) Date of publication and mention
of the grant of the patent:
**13.03.2019 Bulletin 2019/11**

(21) Application number: **13808184.9**

(22) Date of filing: **12.12.2013**

(51) Int Cl.:
**G01L 9/00** (2006.01)

(86) International application number:
**PCT/GB2013/053274**

(87) International publication number:
**WO 2014/096784 (26.06.2014 Gazette 2014/26)**

(54) **MECHANICAL RESONATOR SENSOR**

MECANISCH RESONANT SENSOR

SONDE MECHANIQUE RESONANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2012 GB 201223074**

(43) Date of publication of application:
**28.10.2015 Bulletin 2015/44**

(73) Proprietor: **Oxsensis Ltd**
**Didcot, OX11 0SG (GB)**

(72) Inventors:
• **PECHSTEDT, Ralf-Dieter**
**Didcot**
**Oxfordshire OX11 0QX (GB)**
• **LANGTON, Conrad**
**Didcot**
**Oxfordshire OX11 0QX (GB)**
• **MOVSOVIC, Konstantin**
**Didcot**
**Oxfordshire OX11 0QX (GB)**

(74) Representative: **Boult Wade Tennant LLP**
**Verulam Gardens**
**70 Gray's Inn Road**
**London WC1X 8BT (GB)**

(56) References cited:
**EP-A2- 0 371 592    US-A- 5 442 963**

**Description**

The present invention relates to transducers for detecting one or more properties of a fluid, and sensors incorporating or using such transducers, in particular wherein the transducer includes a mechanical resonator arranged to exhibit a resonant frequency which is dependent upon one or more properties of the fluid such as pressure.

**Introduction**

Pressure sensors which use a resonant beam coupled to a diaphragm are known for example from US 5,195,374, WO98/29722 and US2011/0107838. In each case a resonant beam is excited into resonant vibration, for example using an optical or electrical excitation signal. Mechanisms for stimulating the resonance can be, for example, thermal, piezoelectric and electrostatic. The resonant beam is coupled to a diaphragm which distorts under the pressure to be measured in such a way that a resonant frequency of the beam is related to the pressure. The diaphragm and resonant beam of such sensors are typically fabricated by micromachining from silicon or another suitable material.

Similar sensors may be used to measure other parameters of an adjacent fluid such as density and viscosity, for example as described in GB2470399.

The resonant frequency of the beam or other resonant structure can be detected in various ways, including through piezo-resistance, electrostatically and optically. In US 5,195,374 the resonant beam partly defines a Fabry Perot optical cavity, and a continuous optical detection signal is directed at this cavity via the same optical fibre as used to carry an optical excitation signal. In WO98/29722 sensing piezoresistors are used. US2011/0107838 mentions reading out the resonant frequency using resistive, capacitive or optical sensing methods.

The resonant frequency of the beam typically changes with temperature by virtue of the temperature dependence of the Young's modulus of the material of the beam. Typically, the temperature dependence may be of the order of 100 to 300 ppm/°C and therefore not negligible in high accuracy applications such as those in the oil and gas industries calling for 0.01% or better long term accuracy. As a result, for accurate pressure measurements the simultaneous knowledge of temperature at the transducer is also required in order to carry out active temperature compensation.

US 4,972,076 also describes a resonant beam pressure sensor, and proposes correcting for effect of temperature on the resonant frequency of a first beam by providing a second resonant beam for temperature detection. This second beam is arranged such that, unlike the first beam, it is insensitive to the pressure applied to the diaphragm, but both are excited into resonance by an optical driving signal delivered using the same optical fibre so that their respective temperature coefficients of frequency will track each other in a predictable way. Optical detection of resonant frequency of the beams of US 4,972,076 by use of Fabry-Perot cavities whose widths vary with the vibrations of the resonant beams is described in US 5,195,374.

Optical driving and interrogation of sensors provides advantages over electrical interrogation, for example because driving and interrogation signals can be carried along one or more optical fibres, thereby eliminating possible electrical interference and potentially hazardous electrical discharges. Optical fibres can allow much longer distances between sensors and interrogators. Optical sensor heads coupled to optical fibres also allow operation at temperatures much higher than can be achieved using a sensor head incorporating electrical circuitry or components such as a feedback loop. Generally, electronic circuits cannot be designed to operate reliably above about 270°C, and positioning sensor electronics at significant or long distances from the sensor head can give rise to unwanted noise, for example from cable capacitance or electromagnetic interference.

The present invention therefore seeks to address problems of the related prior art in providing improved mechanical resonator transducers for optical interrogation and improved optical interrogation of and readout from such transducers.

US 5,442,963 discloses a microsensor for application in measurements of pressure including a temperature compensated vibratory bar. EP 0371592 discloses a micromachined solid state sensor comprising first and second beams which can be optically excited into resonant vibration, the second beam being used for temperature correction purposes.

**Summary of the Invention**

The invention is set out in the appended claims.

Embodiments of the invention provide a transducer for detecting one or more properties of a fluid, comprising: a mechanical resonator arranged to exhibit a vibration frequency, and in particular a resonant frequency which is dependent upon one or more properties of the fluid, and a sensor comprising such a transducer. The transducer may typically also comprise a diaphragm arranged to be exposed to or influenced by a fluid, and the mechanical resonator may then be coupled to the diaphragm so as to exhibit a resonant frequency which is dependent upon one or more properties of the fluid such as pressure.

In this document, the term fluid is intended to cover both liquid and gas. The mechanical resonator may be coupled directly to the diaphragm which is exposed to the fluid, or coupled indirectly for example via various types of coupling mechanisms which could include, for example, a secondary internal diaphragm, which could be coupled to the fluid exposed diaphragm using a coupling fluid.

According to embodiments of the invention, the transducer may also comprise a temperature sensing optical cavity arranged to vary in optical path difference in correspondence with changes in temperature of the transducer.

Embodiments of the invention make use of additional structural members that are usually present in this type of transducer to perform an optical temperature measurement without having to modify the mechanical design. For example, the temperature sensing optical cavity may be defined by one or more static components of the sensor head such as surfaces of a substrate and/or other static structures or layers. If the transducer is a micro-machined element, for example made from silicon or another suitable material, which comprises the mechanical resonator and a substrate, then some or all of the temperature sensing optical cavity may be provided by material of the substrate.

The temperature sensing optical cavity may be a reflective type optical cavity such as a Fizeau or Fabry-Perot optical cavity, or some other optical cavity type may be used.

The transducer may be optically coupled to an interrogator, for example using one or more optical fibres, to form the above mentioned sensor. The interrogator may include functional elements such as a resonator driver arranged to drive vibration of the mechanical resonator at or near the resonant frequency; and a detector arranged to detect temperature, or equivalently optical path difference of the temperature sensing optical cavity, at the transducer from optical interference due to the temperature sensing optical cavity, in light received at the detector from the transducer. Typically, the detector will also be arranged to detect the vibration frequency of the mechanical resonator, and typically also to generate an indication of said one or more properties of the fluid from the detected vibration frequency of the mechanical resonator. The detector may also provide other outputs such as the detected temperature or optical path difference of the temperature sensing optical cavity.

The detector may be arranged to compensate the indication of said one or more properties of the fluid for variations in temperature at the transducer, using the detected temperature or optical path difference.

Embodiments of the invention may make use of selection and measurement of the temperature sensing optical cavity using a spectral approach. For example, the detector may comprise a spectrometer or spectral engine arranged to detect, in said light received from the transducer, an interference spectrum caused at least partly by the temperature sensing optical cavity, the detector being arranged to detect the optical path difference from a transform of said interference spectrum.

The transform typically provides a distribution over a dimension corresponding to optical path difference of the temperature sensing optical cavity, and may for example be provided by a Fourier transform or a cross-correlation. The optical path difference and therefore temperature at the transducer may, for example, correspond to position of a peak in a Fourier transform and/or cross-correlation of the interference spectrum, or may be derived using phase information from the Fourier transform at such a peak. According to some embodiments, a Fourier or similar spectral transform may be used to obtain a first, coarse temperature sensing signal which is then used to derive a refined temperature or optical path difference sensing signal, for example using a cross-correlation of the interference spectrum.

Embodiments of the invention provide optical means for measuring and/or controlling the amplitude of the oscillations of the mechanical resonator, and to this end transducer comprises a vibration sensing optical cavity arranged to vary in optical path difference in correspondence with vibration of the mechanical resonator.

One end or facet of the vibration sensing optical cavity may be defined, for example, by a surface of the mechanical resonator. The transducer could be a micro-machined element which comprises said mechanical resonator and a substrate, and another end of the vibration sensing optical cavity could be provided by a surface or facet of the substrate.

The vibration sensing optical cavity may be a reflective type optical cavity such as a Fizeau or Fabry-Perot optical cavity, or some other optical cavity type may be used.

A sensor may therefore be provided which includes the above transducer, a resonator driver arranged to drive vibration of the mechanical resonator at or near the resonant frequency; and a detector arranged to detect amplitude of vibration of the mechanical resonator from optical interference in light received at the detector from the transducer, the optical interference being at least partly caused by the vibration sensing optical cavity. For example, this interference could be caused by an interaction between the vibration sensing optical cavity and aspects of the detector such as a receive interferometer located at the detector. The sensor is also arranged to detect the vibration frequency of the mechanical resonator, from the same optical interference.

The detector may also provide temperature sensing functionality using a temperature sensing optical cavity in the transducer as already mentioned above, and may similarly be arranged to generate an indication of said one or more properties of the fluid from the detected vibration frequency of the mechanical resonator.

The resonator driver may typically comprise a light source such as a laser emitting pulsed drive light which is incident on a surface of the mechanical resonator, causing periodic localised heating, but other types of resonator driver may be used. The resonator driver may be arranged to control amplitude of vibration of the mechanical resonator responsive to the amplitude of vibration detected by the detector, and in particular may control amplitude of vibration of the mechanical resonator such that the amplitude of vibration remains substantially constant, so that the dependence of the frequency of vibration on the amplitude is effectively removed. Alternatively the detector may be arranged to compensate the indication of said one or more properties of the fluid generated from the detected resonant frequency of the resonator for changes in amplitude of vibration of the mechanical resonator detected by the detector.

In order to sense properties of the vibration sensing optical cavity in the transducer, the detector may comprise a receive interferometer, for example a Mach Zehnder interferometer, which is optically coupled to the vibration sensing optical cavity. The receive interferometer has an optical path difference matched to the optical path difference of the vibration sensing optical cavity such that said optical interference in light received at the detector is caused by a combination of said receive interferometer and said vibration sensing optical cavity. An exact match is not required, but the vibration sensing optical cavity and receive interferometer should together provide a suitable interference signal in broad band light, for example from a superluminescent diode. A photo-detector may then be arranged to detect the optical interference and output a corresponding interference signal. This interference signal will then comprise temporal oscillations due to oscillations in the vibration sensing optical cavity which correspond to vibrations of the mechanical resonator. To this end, the sensor may therefore comprise a broad band light source such as a super luminescent diode. The broad band light source may be arranged to deliver broad band light to the transducer, and to sense properties of the vibration sensing optical cavity from optical interference in said broadband light at the detector.

The interference signal typically appears as a sinusoidal form under variations in optical path difference of either the vibration sensing optical cavity or the receive interferometer. A number of different techniques may be used to detect or control amplitude of vibration of the mechanical resonator from the optical interference. In a first technique the amplitude of the mechanical resonator is controlled to a fixed value using a special phase point such as a $\pi$ peak. In particular, the detector is arranged to control the resonator driver such that the amplitude of vibration of the mechanical resonator remains at a level where the interference signal oscillates between turning points, for example a maximum and a minimum, of signal value equal to each other, for example corresponding to an amplitude of vibration of the vibration sensing optical cavity of one quarter of the wavelength of the light carrying the interference signal.

According to a second technique, the detector is arranged to detect amplitude of vibration of the mechanical resonator using one or more ratios or other combinations of a fundamental and/or higher harmonics of the frequency of vibration of the mechanical resonator present in the interference signal. One such suitable combination is the ratio of the fundamental and third harmonics in the interference signal, but a ratio of the second and fourth harmonics may be used, or a combination of these two ratios. The fundamental and/or harmonics in the interference signal may for example be found by expansion of the interference signal in terms of Bessel functions, and may be detected from a Fourier or other spectral transform of the interference signal. The second technique may therefore provide measurement and/or control of the amplitude using Bessel function expansion of a photo-detector receive voltage that provides common-mode rejection of drifts in the calibration curve relating the voltage and phase shift observed in the interference signal.

The fundamental and harmonics of the frequency of vibration are preferably measured at particular DC phase offsets of the interference signal, which can conveniently be set and/or controlled using the or a receive interferometer. Suitable DC phase offsets are either zero or multiples of $\pi$, for example to select even Bessel function harmonics, and quadrature points such as $\pi/2$ to select odd Bessel function harmonics.

According to a third technique the detector is arranged to vary the optical path difference of the receive interferometer to determine the full range of amplitude of the interference signal, i.e the maximum available amplitude under such variations, and to calibrate oscillations in the interference signal which are due to vibration of the mechanical resonator using the determined maximum amplitude, to thereby detect amplitude of vibration of the mechanical resonator from the oscillations in the interference signal which are due to vibration of the mechanical resonator. To this end, the detector may be arranged to vary the optical path difference of the receive interferometer to determine a maximum amplitude of change in the interference signal under such variations by sweeping the receive interferometer across at least a peak and a trough in the interference signal.

Because varying the optical path difference of the receive interferometer through turning points in the interference signal gives rise to corresponding times when the interference signal is not sensitive to changes in optical path difference, the detector may further comprise a second receive interferometer also coupled to the vibration sensing optical cavity, and also having an optical path difference matched to the vibration sensing optical cavity, the second receive interferometer being used to detect oscillations in the vibration sensing optical cavity. The second receive interferometer can therefore be used to detect frequency and/or phase of such oscillations, for example to determine the one or more properties of the fluid such as pressure and/or to control a driving signal for the mechanical resonator.

Generally, the detector may be arranged to detect a phase of the oscillating interference signal discussed above and to provide feedback control to the receive interferometer such that the interference signal is centred about a phase quadrature point. The detector may be arranged to detect the frequency and/or phase of vibration of the mechanical resonator from corresponding oscillations in the interference signal detected from the or a receive interferometer.

Aspects of the transducer or sensor for detecting temperature at the transducer and/or providing temperature compensation may be combined with aspects for detecting amplitude of vibration and effecting suitable compensation or control, for example as set out in the detailed description of embodiments below. In any case, the light received at the detector from the transducer, in which the optical interference is detected, may be broad band light, for example generated using one or more superluminescent diodes arranged to deliver the broad band light to the transducer, and the same broad band light may be used to sense both the temperature and amplitude at the transducer, so that a common broad band light source may be used for both functions.

The invention also provides methods corresponding to the above apparatus, and as described in the detailed embodiments, for example corresponding methods of fabricating a transducer, interrogating a transducer, sensing one or more properties of a fluid using the transducer, compensating a measurement of one or more such properties for temperature at the transducer for example of the bulk of the mechanical resonator, and compensating a measurement for or controlling the transducer to minimise variations in amplitude of oscillation of the mechanical resonator.

## Brief summary of the Drawings

Embodiments of the invention will now be described, by way of example only, with reference to the accompanying drawings, of which:

figure 1 schematically shows a cross section through a transducer according to the invention;
figure 2 schematically shows a sensor using the transducer of figure 1;
figure 3 shows a calibration curve relating optical path difference of a temperature sensing optical cavity in the transducer of figure 1 to a temperature at the transducer;
figure 4 illustrates in more detail the detector of the analyser of figure 2;
figure 5 illustrates the behaviour of an essentially sinusoidal interference signal in broad band probe light resulting from optical coupling between an optical cavity at the transducer and an interferometer at the detector, and in particular the behaviour of this interference signal around a quadrature point;
figure 6 shows how the interference signal may vary when the optical cavity at the transducer oscillates in optical path difference by four selected phase change magnitudes, about the quadrature point;
figure 7 shows how the interference signal may vary when the optical cavity at the transducer oscillates in optical path difference, for two different phase offsets from the quadrature point, and the amplitude of the oscillations corresponding to a pi radian phase shift (peak values);
figures 8a and 8b illustrate harmonics of the interference signal at fundamental (20 kHz) and higher harmonics of the resonant frequency of the mechanical transducer;
figure 9 shows a calibration curve between amplitude of vibration of the mechanical resonator and a ratio of fundamental and third harmonics; and
figure 10 illustrates a further development of the detector of figure 4 to make use of a described third approach for detecting vibration amplitude.

## Detailed description of Embodiments

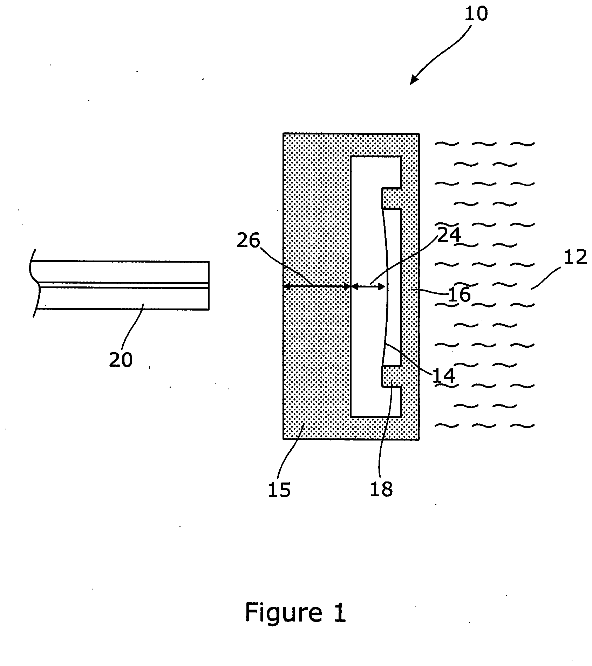

Referring now to figure 1 there is shown schematically a transducer 10 in accordance with the invention. The transducer is designed to detect one or more properties of an adjacent fluid 12, and to this end includes a mechanical resonator 14 which may take the form of a beam or other structure, and which is arranged so as to exhibit a resonant frequency which is dependent upon the one or more properties of the fluid 12. This can be achieved in various ways known from the prior art, for example as illustrated in figure 1 using a diaphragm 16 which may be exposed to the fluid, and coupling the mechanical resonator to the diaphragm, directly or using intervening structures 18, in such a way that distortion of the diaphragm under influence from the fluid 12 leads to changes in the resonant frequency of the mechanical resonator. This may be effected by distortions in the diaphragm giving rise to changes in tension in the mechanical resonator 14.

Typically, a property of the fluid to be detected may be pressure, and changes in pressure of the fluid give rise to distortions of the diaphragm 16 and therefore to changes in the resonant frequency of the mechanical resonator 14 which can be used to determine the pressure from an unambiguous relationship between the two using a suitable calibration.

The transducer may typically be fabricated using micromachining methods, for example from silicon, with the diaphragm 16 and mechanical resonator 14 supported above a substrate 15.

Mechanical oscillation of the mechanical resonator 14 may be achieved in various ways, including by expansion and contraction under localised heating of the mechanical resonator 14 itself, or of another structure coupled to the mechanical resonator 14, the heating being driven by a light source that is pulsed at or close to the resonant frequency.

Ways in which this can be implemented include absorbing light at a thin metal layer deposited on the resonator itself as described in Venkatesh and Culshaw, Electronics Letters, 1985, vol 21, no.8, or in sections of doped silicon as described in Palit et al, Proceedings of the 37th workshop on geothermal reservoir engineering, Stanford University, Jan 30 - Feb 1 2012, SGP-TR-194.

In use, the transducer 10 is coupled to an optical fibre 20. The optical fibre is used to deliver pulsed drive light to the transducer which drives oscillation of the mechanical resonator 14 as discussed above. The optical fibre 20 may also be used to detect parameters of the mechanical resonator. Such parameters may include one or more of phase of the mechanical resonator for example in order to control the pulsed drive light, the frequency of resonance of the mechanical resonator 14 for example in order to detect pressure or some other property of the fluid 12, and the amplitude of resonance of the mechanical resonator 14. These parameters of the transducer 10 can be detected from optical interference resulting from a vibration sensing optical cavity 24 which is arranged to vary in optical path difference in correspondence with vibration of the mechanical resonator 14. The vibration sensing optical cavity may be defined, for example, by opposing faces of the mechanical resonator 14 and the substrate 15.

The optical fibre may also be used to detect other properties of the transducer 10. For example, the transducer may include a temperature sensing optical cavity 26 which has an optical path difference which varies in correspondence with changes in temperature of the transducer, and in particular with changes in a quasi steady state or bulk temperature of the transducer rather than a rapidly changing temperature of a part of the transducer being used to drive oscillation of the mechanical resonator 14. The temperature sensing optical cavity 26 may, for example, comprise silicon or some other material of the transducer, such that temperature dependence of the refractive index and/or thermal expansion of the material give rise to changes in optical path difference of the temperature sensing optical cavity under changes in temperature of the transducer.

The resonant frequency of the mechanical resonator 14, for a given fixed value of a property such as pressure of the fluid to be detected, will typically vary depending on the temperature of the transducer, for example due to thermal expansion and changes in bulk mechanical properties of the material of the transducer under changes in temperature, and also under changes in the amplitude of the oscillations of the mechanical resonator 14. The detected temperature and amplitude can therefore be used to correct or compensate for these effects in detecting one or more properties of the fluid, as discussed in more detail below.

The optical cavities in the transducer 10 to be used for detecting parameters of the transducer 10 may conveniently be Fabry Perot cavities, although other cavity types and configurations may be used.

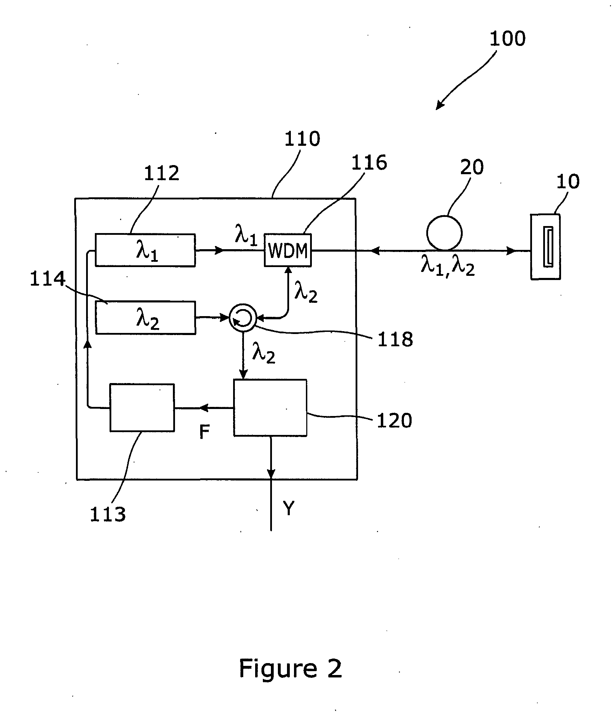

A sensor 100 incorporating the transducer 10 of figure 1 is shown schematically in figure 2. The sensor comprises the transducer 10 coupled to an interrogator 110 using the optical fibre 20. A first light source 112 driven by first light source driver 113 emits drive light used to drive oscillation of the mechanical resonator 14 in the transducer 10. A second light source 114 emits probe light for interrogating the transducer 10. The drive light and probe light are combined using a coupling arrangement 116 such as a wavelength division multiplexer so as to pass both drive and probe light along the optical fibre 20 to the transducer 10.

The drive light could, for example, have a wavelength of about 1310 nm and the probe light a wavelength of about 1550 nm. The first light source could be a narrow band, laser source, or could be a broadband source such as a superluminescent diode. The second light source is preferably a broadband source such as a superluminescent diode, so that optical cavities in the transducer can be interrogated using white light interferometry techniques for which the coherence length of the light source should be less than the optical path difference of any optical cavity to be detected.

The probe light returning along the optical fibre 20 from the transducer 10 is directed by the coupling arrangement 116 and a circulator 118 to a detector function 120 which detects parameters of the sensor head such as temperature, and frequency, phase and amplitude of the mechanical resonator 14, from optical interference in the probe light arising from the temperature sensing optical cavity 26 and the vibration sensing optical cavity 24 of the probe light in one or more ways. The interference signals can be detected using techniques such as white light interferometry.

On the basis of the detected parameters the detector function 120 outputs one or more feedback signals F and output signals Y. The one or more feedback signals F may be used, for example, to control the first light source through the first light source driver 113, for example by controlling the phase, power and/or frequency of pulsing of the first light source. The one or more output signals Y may represent properties of the transducer and/or the fluid adjacent to the transducer such as pressure.

In one configuration, the detector function uses interference properties of the received probe light due to the vibration detecting optical cavity 24 to detect the phase and frequency of oscillation of the mechanical resonator 14. These are then used to derive suitable feedback signals F sent to the driver 113 to modulate the power of the first light source at the resonant frequency with a suitable phase delay, for example with a phase lag of 90 degrees. The detected frequency of oscillation is then also used to provide an output signal directly representing the oscillation frequency, and/or an output signal representing pressure at the transducer 10 through a calibrated relationship between frequency of oscillation and pressure.

Typically, however, the resonance frequency of the mechanical resonator 14 exhibits a significant temperature dependence of the order of 100 to 300 ppm/°C. In order to compensate for this temperature dependence the detector function 120 may use interference properties of the received probe light due to the temperature detecting optical cavity 26 to detect temperature at the transducer 10. The detected temperature may be used in generating an output signal representing temperature compensated pressure at the transducer, may be output as a separate temperature output signal, and/or may be used in deriving or providing suitable feedback signals F.

From an optical point of view, the transducer 10 shown in figure 1 contains alternating layers of a material such as silicon, and air or another gas, with corresponding refractive indices $n_{Si}$ and $n_a$. When illuminating the transducer with the probe light, at each of those interfaces a certain amount of the light is reflected back towards the interrogator 110. The amount of back-reflected light can be calculated by the following equation:

$$R = \left( \frac{n_{Si} - n_a}{n_{Si} + n_a} \right)^2 \qquad \text{eqn. 1}$$

For an air/silicon interface with $n_a$ = 1 and $n_{Si}$ = 3.5, about 30% of the probe light is reflected back. This leads to multiple reflections from the various interfaces present in the transducer forming a multitude of optical cavities. In particular, reflections from the inner and outer surface of the substrate form a temperature sensing optical cavity with an optical path difference (OPD) of:

$$OPD_T = 2 n_{Si} d_{Si} , \qquad \text{eqn. 2}$$

where $d_{Si}$ denotes the thickness of the (silicon) substrate. By virtue of the temperature dependence of the refractive index and the geometrical thermal expansion of the substrate or other component $OPD_T$ is an unambiguous function of temperature. Hence, $OPD_T$ can be used as a parameter of the transducer to be measured optically that is related unambiguously to temperature. From equation 2, the change in $OPD_T$ for a given temperature change $dT$ can then be calculated as follows:

$$d(OPD_T) = 2 d_{Si} \left( \frac{dn_{Si}}{dT} + n_{Si} \alpha_{Si} \right) dT , \qquad \text{eqn. 3}$$

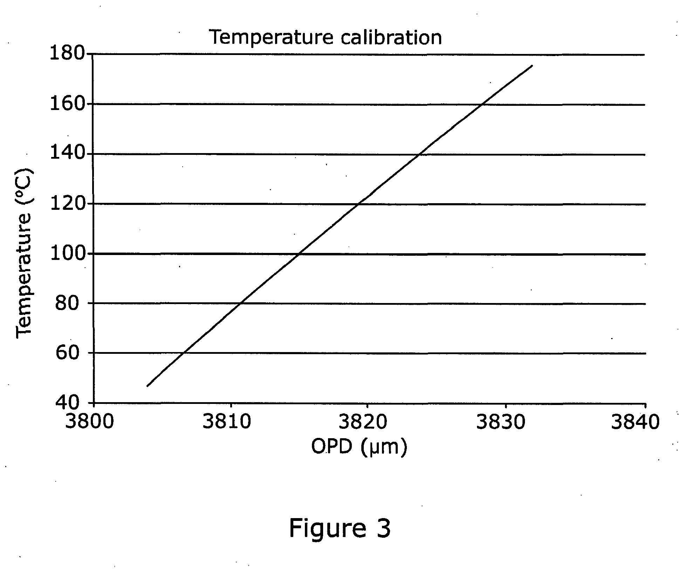

with $\alpha_{Si}$ denoting the linear thermal expansion coefficient of the (silicon) substrate material. For example, considering a 500 μm thick silicon substrate and using the thermal expansion coefficient $\alpha_{Si}$ = 3.5 ppm/°C and the thermo-optic coefficient $dn_{Si}/dT$ = 1.86x10$^{-4}$/°C, the rate of change of $OPD_T$ can be estimated as 0.2 μm/°C. Hence, the substrate can act as a temperature sensing optical cavity and the temperature at the transducer may be determined from the corresponding optically measured $OPD_T$ via a calibration curve T = f($OPD_T$). Figure 3 shows an example of such a calibration curve for a 529 μm thick silicon substrate.

Of course, various other static structures in the transducer can be used to measure temperature, through similar detection of variations in optical path difference, and such structures may be formed of silicon or some other material.

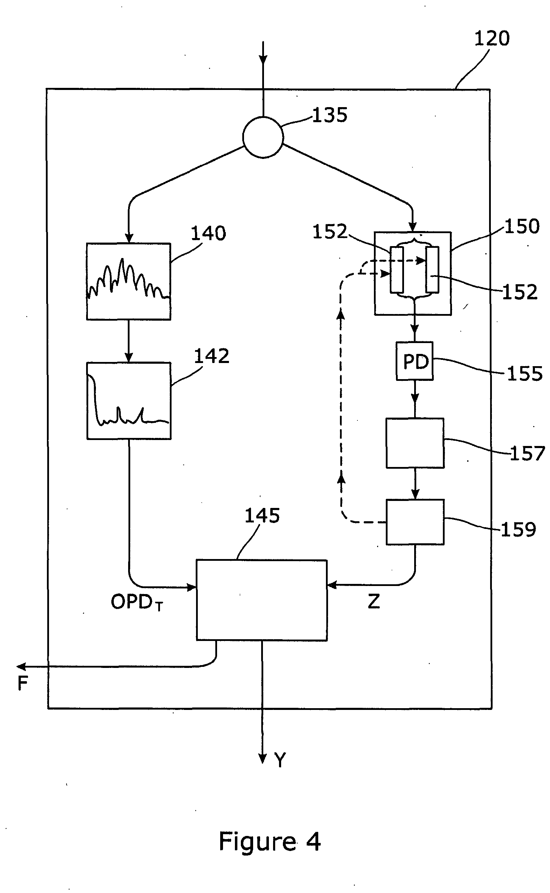

The measurement functionality used to detect a temperature dependent optical path difference in the transducer can be implemented within the detector function 120 shown generally in figure 2. However, in more detail it can be implemented as shown in figure 4 using a spectral engine 140 such as a spectrometer coupled to a transform function 142. The spectral engine 140 delivers an interference spectrum of the received probe light to the transform function 142 which uses one or more mathematical transforms such as Fourier transforms and cross correlation functions to detect and output the optical path difference of the temperature sensing optical cavity $OPD_T$ or an equivalent signal, for use by analysis function 145

Using a broad-band light source such as, for example, a super-luminescent diode (SLD) as the second light source 114 of figure 2, the OPD of the temperature detecting optical cavity 26 is then determined from the interference spectrum arising from interaction of the probe light with the temperature sensing optical cavity. Typically, a spectral bandwidth of the SLD from about 30 to 50 nm is sufficient to capture enough interference fringes. The spectral engine 140 could be implemented, for example, using a dispersive optical element such as a diffraction grating together with a CCD array. Properties of the interference spectrum can then be used to determine $OPD_T$.

One way of carrying out analysis of the interference spectrum is discussed in Liu and Fernando, "A frequency division multiplexed low-finesse fibre optic Fabry-Perot sensor system for strain and displacement measurements", Rev. Sci. Instrum., vol 71, no. 3 (2000). In accordance with this document, a discrete Fourier transform of the interference spectrum is calculated by the transform function 142, and the positions of the one or more peaks in the Fourier transform output correspond to the optical path differences of the one or more optical cavities in the sensor head, including the temperature sensing optical cavity 26. The peak corresponding to the temperature sensing optical cavity 26 can then be selected and the corresponding OPD measured, resulting in a detection of temperature at the transducer 10. The equivalent use of a cross-correlation function is discussed in Zhenguo and Qingxu, Proceedings of the sixth International Symposium on Test and Measurement, Dalian, China, 1-4 June 2004, volume 4 page 3509, 2005.

A technique enabling a more accurate determination of the optical path difference OPD corresponding to the temperature sensing optical cavity is described in GB1204673.6, filed by the same assignee/applicant as the present application before the UK Intellectual Property Office on the 16 March 2012. The content of this patent application is hereby incorporated by reference in its entirety for all purposes. Using this technique, the spectral engine 140 outputs an interference spectrum arising from interaction of the probe light with the temperature sensing optical cavity 26. The transform function 142 then comprises a coarse detector function which carries out a coarse analysis of the interference spectrum to derive a coarse temperature sensing cavity output, for example based on a peak of a Fourier transform of the interference signal or a peak of an envelope of a cross correlation of the interference signal with a set of periodic functions. Based on the coarse temperature sensing cavity output and the interference spectrum, a refined detector function then derives a refined temperature sensing cavity output which provides the detected temperature signal desired, by locating or tracking fine structure peaks in a cross correlation of the interference spectrum.

The use of coarse and refined detector functions as outlined above adds the advantage of much finer resolution in measurements over a larger range than can be achieved, for example, by using only a detected peak in a Fourier transform of the interference spectrum. However, special care has to be taken when applying the technique of coarse and refined detector functions to a substrate that exhibits optical dispersion, i.e. the refractive index of which varies with the wavelength of light as it is the case for silicon. In this case the outputs of the coarse and refined detector functions will be governed by the group and phase index of the substrate material, respectively. Without further considerations, this will lead to mismatches over large enough variations in temperature, resulting in the refined detector function receiving an unsuitable input provided by the coarse detector function. To address this issue, a variable offset can be applied to the signal from the coarse detector function to compensate for different rates of change of the coarse and fine optical path difference signals due to dispersion in the optical cavity.

In order to establish a calibration **f** between detected optical path difference of the temperature sensing optical cavity and a temperature signal, i.e. $T = f(OPD_T)$, the OPD may be measured together with the temperature of the transducer 10 at a number of set temperature points. The reference temperature measurement can be carried out, for example, by placing a suitable thermocouple in direct contact with the transducer.

The resonant frequency of the mechanical resonator 14 may depend on the amplitude of the resonator oscillations as well as on temperature and on the one or more properties of the fluid to be detected. Hence, for accurate measurements of the one or more properties, the amplitude of the oscillations $\delta d_a$ also should be detected and used by the detector function 120, either to actively compensate for this dependence or to keep the amplitude constant or otherwise controlled via a feedback loop through the first optical source driver 113 by controlling the optical power of the first light source. Varying the optical power of the first light source changes the amount of heat delivered to the mechanical resonator 14, which in turn will affect the amplitude of oscillation. Different ways of optically measuring the amplitude of the oscillations of the mechanical resonator 14 will be discussed later in this document.

As explained above, a transducer 10 as shown in figure 1 generally contains alternating layers of a material such as silicon and a gas such as air with corresponding refractive indices $n_{Si}$ and $n_a$ leading to multiple reflections from the various interfaces present. These form a multitude of optical cavities when illuminated with the probe light, including a vibration sensing optical cavity 24 which may, for example, be formed by an air or gas cavity defined by an inner surface of the substrate 15 and an opposing surface of the mechanical resonator 14 as shown in figure 1. Measuring the size of this vibration sensing optical cavity 24 can yield the frequency, amplitude and phase of the mechanical resonator oscillations. In order to select and measure this particular optical cavity, in principle, the approach described above for selecting and measuring the temperature sensing optical cavity 26 could be used. However, typical mechanical resonator frequencies are of the order of several 10 kHz to several 100 kHz, making the spectral based approach illustrated by the spectral engine 140 and transform function 142 of figure 4 difficult to implement due to its inherently limited rate of operation.

A coherence-multiplexing approach may therefore be used instead, employing a receive interferometer 150 as shown in figure 4 to facilitate selecting the vibration sensing optical cavity 24 and therefore measuring the mechanical resonator oscillations. Rao and Jackson, Meas. Sci. Technol. Vol. 7 (1996) p. 981 provides background as to how such a coherence-multiplexing approach may be implemented. Probe light subject to interference due to a combination of the vibration sensing optical cavity 26 and the receive interferometer 150 is detected by a photo-detector 155 such as a photodiode followed by a suitable amplifier such as trans-impedance amplifier 157. In figure 4 the photodiode is shown as being optically coupled to the transducer 10 and therefore to the vibration sensing optical cavity 24 through the receive interferometer 150, but various other configurations in which the cavities and photo-detector are optically coupled are possible. The output of the amplifier 157 may be used as an input to an optional receive interferometer controller 159 which can be used to control the receive interferometer 150 in order to suitably track the OPD of the vibration sensing optical cavity 24, and to output a suitable signal Z representing **OPD$_a$**, or the amplifier 157 may be used to provide signal Z as a more direct representation of the amplified photo-detector voltage to the analyser 145.

Various ways in which a receive interferometer can be controlled in this way to track the vibration sensing optical cavity 24 are described in WO90/22775, WO99/60341 and WO2012/140411. However, in other arrangements, the receive interferometer controller may be omitted, for example when the receive interferometer does not include any adjustment mechanism such as the phase modulators 152 mentioned below.

An effect of employing a receive interferometer 150 is the measurement of the vibration sensing optical cavity 24 without being affected by other optical cavities in the system, for example the temperature sensing optical cavity 26. For this purpose, the receive interferometer 150 is placed in series with the vibration sensing optical cavity 24, for instance, in the return path of the probe light. In figure 4, the receive interferometer is shown incorporated in the detector function 120, with probe light received from the transducer 10 being split between the receive interferometer and the spectral engine 140 by splitter 135. Importantly, the OPD of the vibration sensing optical cavity 24 should be matched to the OPD of the receive interferometer 150.

In figure 4 the receive interferometer 150 is shown as a Mach-Zehnder Interferometer (MZI), but other types of interferometers, such as, for instance, a Michelson or Fabry-Perot interferometer, could be deployed instead.

Advantageously, an integrated version of an MZI may be used in which the OPD of the receive interferometer 150 is accurately pre-defined by a mask used for lithography during manufacture. The MZI may also contain one or two Phase Modulators (PM) 152 that can modulate the OPD of the MZI to a certain extent. The modulation speed and range of the PMs depends on the type of MZI and PM design. Consider, for instance, an integrated MZI realised in silicon and employing thermal phase modulators. Such PM's may have a dynamic range of several $\pi$ radians and a modulation bandwidth from hundred's of Hz to several kHz depending on design, for example referring to the discussion in Clark et al., "Thermo-Optic Phase Modulators in SIMOX Material", Integrated Optics Devices IV, Proceedings of SPIE VOl. 3936 (2000) p16. Integrated MZIs realised in other materials such as LiNbO$_3$ or silica on silicon could also be employed.

As already discussed above in respect of the detection of temperature at the transducer 10, the second light source 114 may be provided by a broad-band light source such as a Super-Luminescent Diode (SLD). The importance of the broad-band nature is that these types of light source have a limited coherence length **Lc**. As a typical example, for an SLD with a centre wavelength of 1550nm and a bandwidth of 50nm, the coherence length would be of the order of **Lc** $\sim (1550)^2/50 \sim 50\mu$m, which is suitable to detect interference caused by the optical cavities in the transducer 10 in combination with the wavelength specificity of the spectral engine and the matched OPD of the receive interferometer 150, but which is shorter than any of the OPDs to be detected so that no interference results solely from the action of any optical cavities in the transducer 10.

Referring for example to Rao and Jackson, Meas. Sci. Technol. Vol. 7 (1996) p.981, it can be shown that the transfer function of the vibration sensing optical cavity in tandem with the receive interferometer 150 of the interrogator 120 is given by:

$$I = I_0 \left\{ 1 + V \exp\left[ -\left( 2\frac{OPD_a - OPD_{MZ}}{L_c} \right)^2 \right] \cos\left[ \frac{2\pi(OPD_a - OPD_{MZ})}{\lambda_2} \right] \right\}$$

- eqn. 4

where

$$OPD_a = 2d_a \qquad \text{-eqn. 5}$$

Here, **OPD$_a$** is the optical path difference of the vibration sensing optical cavity 24, **OPD$_{MZ}$** denotes the optical path difference of the receive interferometer 150, $\lambda_2$ is the centre wavelength of the probe light in vacuum, **I** is the optical intensity at the photo-detector 155 and **I$_0$** is the total power arriving at the photo-detector. **V** describes the opening or visibility of the resulting fringes and depends on the power distribution and states of polarisation between the interfering light beams, for example the light reflected from each end of the vibration sensing optical cavity 24. Its maximum value in the set-up shown in figures 1, 2 and 4 under optimum conditions equals 0.5. For this scheme to be useful in selecting a particular optical cavity, the size of each optical cavity present in the system must be significantly larger than the coherence length of the light source:

$$OPD_T, OPD_a, OPD_{MZ} \gg L_c \qquad \text{eqn. 6}$$

In this equation $OPD_T$ denotes the OPD of the temperature sensing optical cavity as defined in equation 2. If this condition holds then no interference occurs due to any of the optical cavities in the transducer 10 or interrogator 110 in their own right because probe light reflected from the two ends of each optical cavity is respectively delayed by more than the coherence length. By designing or tuning the receive interferometer 150 so that its $OPD_{MZ}$ is matched to the $OPD_a$ of the vibration sensing optical cavity, portions of the probe light reflected from the two interfaces of the vibration sensing optical cavity can be brought back into phase through traversing the receive interferometer 150 and an interference signal from only the vibration sensing optical cavity is generated at the photo-detector 155. More precisely, one has to fulfil the condition:

$$| OPD_a - OPD_{MZ} | \ll L_c \qquad \text{eqn. 7}$$

In this case, the exponential function in equation 4 roughly equals one and the initial equation 4 can therefore be approximated by:

$$I = I_0 \left\{ 1 + V \cos \left[ \frac{2\pi(OPD_a - OPD_{MZ})}{\lambda_2} \right] \right\} \qquad \text{eqn. 8}$$

The size of the vibration sensing optical cavity $d_a$ can be written as the sum of a (quasi)-static part $d_0$ and an oscillation part $\delta d_a$ of amplitude $y_0$ at the frequency of oscillation of the mechanical resonator $f_{osc}$:

$$d_a(t) = d_0 + \delta d_a(t) \qquad \text{eqn. 9}$$

where

$$\delta d_a(t) = y_0 \cos(2\pi f_{osc} t + \varphi) \qquad \text{eqn. 10}$$

If many copies of transducer 10 are produced by micro-machining, the (quasi)-static part $d_0$ will vary by a few $\mu$m between transducer copies, and will drift by a similar amount due to changes with temperature due to thermal expansion of the transducer material, and may also vary with applied pressure.

Knowledge of the resonator phase $\varphi$ may also be required by the first laser source driver 113 to drive the mechanical resonator 14; hence this may be one of the feedback parameters F generated by the detector function 120. Clearly, as soon as the size of the vibration sensing optical cavity 24 is measured at timescales comparable to the oscillation frequency this phase information becomes available. This applies to various techniques discussed below for obtaining an amplitude signal from the vibration sensing optical cavity 24, so will not be outlined in detail in each case.

Using equations 5, 9 and 10 in equation 8, and taking into account that by design the MZI or other receiver interferometer 150 approximately matches the vibration sensing optical cavity 24 ($2d_0 \approx OPD_{MZ}$) in accordance with equation 7, the AC part of the voltage output by the photo-detector which corresponds to the received intensity I is given by:

$$V_{AC} = I_0 V G \cos \left[ \phi_0 \cos(2\pi f_{osc} t + \varphi) + \phi_{DC} \right], \qquad \text{eqn. 11}$$

where the optical phase offset $\Phi_{DC}$ contains only slow moving or drifting components (e.g., change in cavity size due to applied pressure or temperature, drift in $OPD_{MZ}$) and any contributions from the one or more phase modulators 152 in the receive interferometer 150. **G** is an effective gain, including for example the responsivity of the photo-detector 155 and electronic gain of the trans-impedance amplifier 157.

The voltage at the amplifier output is related to the light intensity I at the photo-detector 155 by *voltage* = **IG.** The optical phase amplitude $\Phi_0$ corresponding to the vibration amplitude $y_0$ is given by

$$\phi_0 = \frac{4\pi y_0}{\lambda_2} \qquad \text{eqn. 12}$$

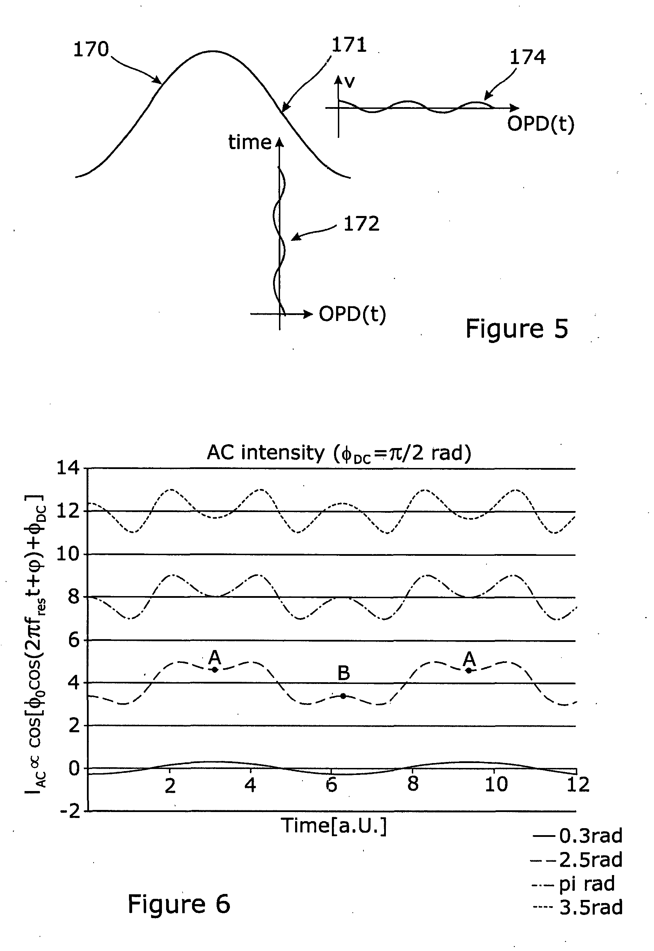

The AC part of the amplifier output (equation 11) is now analysed in more detail. First, consider gradually increasing the optical phase amplitude $\Phi_0$ whilst keeping the offset $\Phi_{DC}$ fixed at $\pi/2$. This point is commonly called the quadrature point. At quadrature, a small phase signal will be translated into a maximum intensity signal as it is the most linear part of the transfer function. The relationship between the oscillation of the mechanical resonator and the output of the photodiode at the quadrature point 171 is schematically illustrated in figure 5 in which the transfer function 170 represents the relationship between the OPD of the vibration sensing optical cavity 24 and the output voltage of the photo-detector expressed in equation 8. Graph 172 represents how the OPD of the vibration sensing optical cavity 24 varies with time under oscillation of the mechanical resonator 14, and graph 174 represents how the voltage at the photodiode varies as a consequence.

Figure 6 shows how the graph 174 of photo-detector voltage changes as the optical phase amplitude $\Phi_0$ is increased from 0.3 radians through 2.5 radians, $\pi$ radians and to 3.5 radians, corresponding to an increase in the amplitude of the oscillations of the mechanical resonator 14. At small optical phase amplitudes the photo-detector voltage signal is of the same form as shown in figure 5, but as the OPD of the vibration sensing optical cavity 24 oscillates with greater and greater amplitude about the quadrature point the shape of the photo-detector response departs further from a simple sine or cosine function. Note that for clarity, the different graphs in figure 6 are offset with respect to each other by a constant abscissa value of four.

For small phase amplitudes $\Phi_0$ one finds analytically from equation 11 that:

$$V_{AC}(t) \approx -I_0 V G \phi_0 \cos\left(2\pi f_{osc} t + \varphi\right) \qquad \text{eqn. 13}$$

This demonstrates that for small movements of the mechanical resonator 14 the AC voltage at the photo-detector 155 is an inverted form of the resonator phase (figure 6, $\Phi_0$= 0.3 rad). Hence, by measuring $\mathbf{V_{AC}}$ and assuming a constant factor $\mathbf{I_0 V G}$, equation 13 could be used to determine the oscillation amplitude $\mathbf{y_0}$ via equation 12. However, any variation in optical loss of the fibre 20 and optical connections between the transducer 10 and the interrogator 110, and variations in the intensity of the second light source 114 will affect the value of the optical power $\mathbf{I_0}$ arriving at the photo-detector. Additional drifts may occur in $\mathbf{V}$ and $\mathbf{G}$ for a variety of reasons apparent to the skilled person. Hence, equation 13 does not provide a very reliable way of measuring or controlling the amplitude of oscillation of the mechanical resonator 14, although it can be used to measure the phase and frequency.

We will now describe a number of ways in which the amplitude of oscillation of the mechanical resonator 14 can be determined, or controlled in a feedback loop, using interference caused by the vibration sensing optical cavity 24 and the receive interferometer 150 in combination, and the corresponding interference signal in the output of the photo-detector 155. In each case, the frequency and phase of oscillations of the vibration sensing optical cavity can also be detected from the photo-detector signal, although this is not described in detail here.

According to a first approach, the analysis function 145 receives an input Z representing the interference signal output by the photo-detector, and provides feedback control F to the vibration sensing cavity driver 113 to maintain the amplitude of oscillations of the vibration sensing optical cavity (and therefore the amplitude of oscillations of the mechanical resonator) at a constant level. In particular, the feedback may control the amplitude such that the interference signal, and therefore the phase, oscillates in time between controlled endpoints in the phase or time dimension, where these endpoints correspond to turning points of the signal in the phase or time dimension which are equal to each other in signal value, typically corresponding to endpoints or turning points of equal voltage output by the photo-detector 155. This can be achieved if the amplitude of vibration of the vibration sensing optical cavity is one quarter of the wavelength of the light carrying the detected interference signal.

Gradually increasing the amplitude of oscillation of the mechanical resonator 14 about the quadrature point ($\Phi_{DC}$ = $\pi/2$ radians) illustrated in figure 5 beyond an optical phase amplitude $\Phi_0$ of $\pi/2$ radians leads to forming of indentations at the peaks and troughs as indicated by the points A and B in figure 6. However, the value of $\Phi_0 = \pi$ is of particular interest as the points A and B match up exactly at the same level. Values of multiples of $\pi$ could also be used with the same effect.

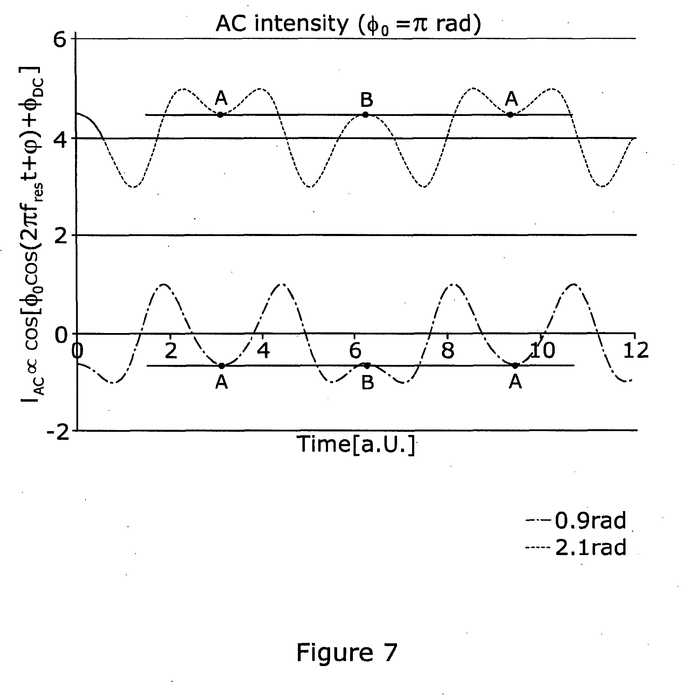

Further increasing $\Phi_0$ beyond $\pi$ results in a crossover of the points A and B (figure 6, $\Phi_0$ = 3.5rad). Importantly, the levelling of the points A and B still holds even when the offset $\Phi_{DC}$ is different from $\pi/2$. For example, in figure 7 the AC voltage at the photo-detector is plotted at the phase amplitude $\Phi_0 = \pi$ for two different phase offset values of $\Phi_{DC}$ = 0.9 radians and $\Phi_{DC}$ = 2.1 radians. Further, it is important to realise that the characteristic levelling of the points A and B is independent of the factor $I_0VG$ in front of equation 11. Any variation of $I_0VG$ would, for $\Phi_0 = \pi$, only affect the opening of the curve but not the equal height of the points A and B relative to each other. Therefore, the levelling of the points A and B provides a robust method of controlling the oscillation amplitude that is free of the disadvantages described above.

In practical terms, processing of the interference signal output by the photo-detector could be carried out by the detector function 120 as follows. Referring to figure 6, peak detection can be used to extract the values of A and B. If A > B, then $\Phi_0 < \pi$ and the modulation amplitude of the drive light is increased until the condition A = B is reached. Similarly, if A < B, then $\Phi_0 > \pi$ and the modulation amplitude of the drive light is decreased until A = B is fulfilled. In that way, the resonator phase amplitude $\Phi_0$ can be locked to a value of $\pi$. From equation 12, the corresponding oscillation amplitude $y_0$ at a probe light wavelength of 1550nm can be calculated as 387.5nm. The one or more phase shifters 152 in the receive interferometer 150 may be used to keep the average of A and B close to the middle where above analysis is most robust, using the receive interferometer controller 159. Controlling the amplitude in this way will also enable the detector function to retrieve both the frequency $f_{osc}$ and phase of the mechanical resonator 14 from the photo-detector signal, by using, for instance, a Fast-Fourier Transform based method.

Depending on design criteria, it may not always be practical for the mechanical resonator 14 of a transducer 10 to operate with an amplitude of a quarter of the wavelength of the probe light. Therefore, the second and third approaches discussed below enable determination and/or control of the amplitude of oscillation, along with determinations of frequency and phase if desired, at much lower amplitude levels.

According to a second approach, the analysis function 145 receives an input Z representing the interference signal output by the photo-detector and detects the fundamental and/or higher harmonics of the vibration frequency of the mechanical resonator in the interference signal. The analysis function 145 then derives an amplitude of vibration of the mechanical resonator from one or more ratios or other functional dependencies of these harmonics. In particular, portions of the interference signal at the fundamental and third harmonics of vibration may be used, especially if the interference signal is controlled to oscillate approximately about the quadrature point 171 as discussed above. However, other ratios and combinations of ratios may be used. The derived amplitude may be actively used to compensate an output derived from the resonant frequency for changes in amplitude, or may be used in a feedback loop to control the amplitude, for example to maintain the amplitude at a constant level. This technique is advantageous in providing common-mode rejection of drifts in the relationship between the interference signal output of the photo-detector and the phase shift.

Ohtsuka, "Dynamic displacements of small displacements by laser interferometry", Trans. Inst. Meas. Contr., Vol. 4 (1982), p.115 discusses methods for retrieving the dynamic optical phase of an optical cavity that is illuminated with a coherent light source. In a similar vein, expanding the AC component of the photo-detector voltage represented by equation 11 in terms of Bessel functions of the first kind yields:

$$V_{AC}(t) = -2I_0VGJ_2(\phi_0)\cos[2\varphi_{osc}(t)]\cos(\phi_{DC}) + 2I_0VGJ_4(\phi_0)\cos[4\varphi_{osc}(t)]\cos(\phi_{DC}) - $$
$$-2I_0VGJ_1(\phi_0)\cos[\varphi_{osc}(t)]\sin(\phi_{DC}) + 2I_0VGJ_3(\phi_0)\cos[3\varphi_{osc}(t)]\sin(\phi_{DC}) + higher\ harmonics$$

<div align="right">eqn. 14</div>

where

$$\varphi_{osc}(t) = 2\pi f_{osc}t + \varphi \qquad\qquad \text{eqn. 15}$$

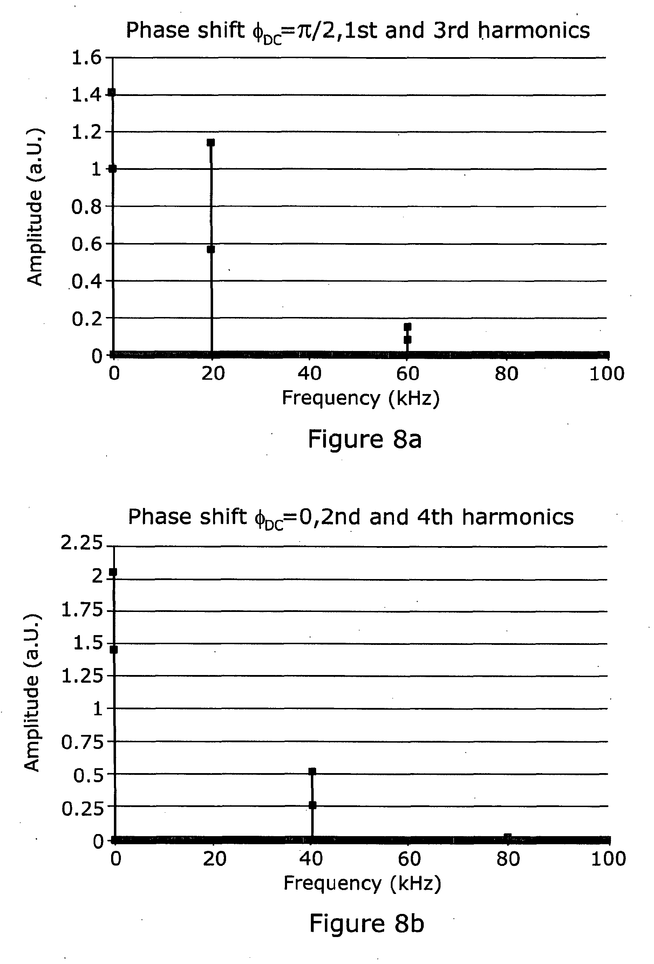

is the total time dependent phase of the oscillations of the vibration sensing optical cavity. Note that at particular values of the optical phase shift $\Phi_{DC}$, only even (for $\Phi_{DC} = 0$) or odd (for $\Phi_{DC} = \pi/2$) Bessel function harmonics of the resonator frequency are present. Note that $\Phi_{DC} = \pi/2$ corresponds to the quadrature point illustrated in figure 5. These harmonics are illustrated in figures 8a and 8b for a mechanical resonator 14 oscillating at a fundamental frequency (first harmonic) of 20 kHz, and second to fourth harmonics therefore at 40, 60 and 80 kHz. The harmonic amplitudes found in the interference signal can be derived for example using a fast Fourier (FFT) or other suitable mathematical transform or hardware based filtering of the photo-detector output signal, which in the case of a Fourier transform analytically yields:

$$V_1 = 2I_0VG|J_1(\phi_0)\sin(\phi_{DC})| \quad measured\ @\ 2\pi f_{osc},$$
$$V_3 = 2I_0VG|J_3(\phi_0)\sin(\phi_{DC})| \quad measured\ @\ 3(2\pi f_{osc}).$$

<div align="right">eqn. 16</div>

Note that $V_1$ and $V_3$ are always non-negative because the FFT provides a magnitude. By calculating the ratio $V_1/V_3$ possible drifts in the value of the common factor $I_0VG$ are cancelled out and a stable calibration curve determining $\Phi_0$ and therefore $y_0$ (via equation 12) from the ratio $V_1/V_3$ can be established.

Advantageously, the exact value of $\Phi_{DC}$ is not crucial for this procedure either as long as it approximately equals $\pi/2$ (quadrature point of figure 5) so as to have enough signal strength in the fundamental and 3rd harmonic signals. This may be achieved via the one or more phase modulators 152 in the receive interferometer 150. In a similar way, the ratio of $J_2/J_4$ at $\Phi_{DC} = 0$ or indeed, other techniques like the $J_1...J_4$ method described in Sudarshanam and Srinivasan, "Linear readout of dynamic phase change in a fiber optic heterodyne interferometer", Optics Letters, Vol. 14 (1989) p.140 could be adopted.

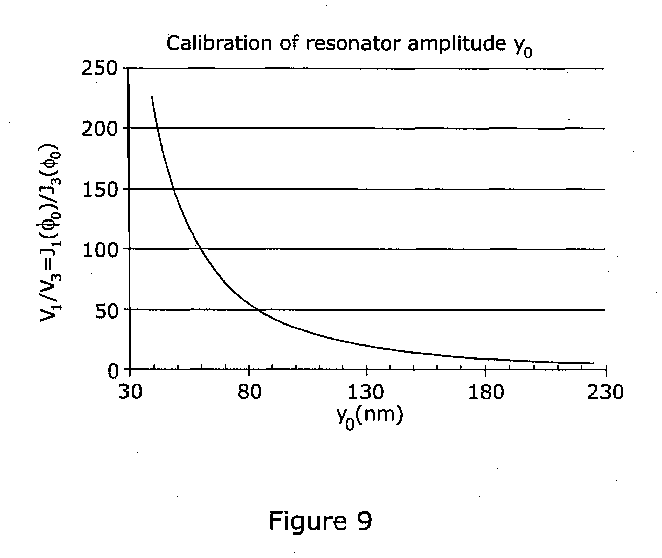

In figure 9, the ratio $V_1/V_3$ is plotted for the amplitude range $y_0$ between 40nm and 230nm. As can be seen, this second approach is suitable for a reasonably large range of oscillator amplitudes shown on the abscissa. However for amplitudes below about 40 nm the fundamental dominates more and more over higher harmonics so that the calibration curve becomes increasingly steep, and therefore less usable. This is a result of $V_3$ decreasing and hence, becoming increasingly affected by noise.

A third approach for deriving the amplitude of oscillation of the mechanical resonator 14 from the interference signal, which is suitable for small amplitudes of oscillation, is therefore now described. According to this approach the optical path difference of the receive interferometer is swept or varied in order to determine the maximum amplitude range of the interference signal under such variations. This amplitude range is then used to calibrate the smaller oscillations in the interference signal which are due to vibration of the mechanical, to thereby detect amplitude of vibration of the mechanical resonator. This calibration sweep or variation in the optical path difference of the receive interferometer can be achieved using a calibration sweep of the optical path difference that corresponds to a $\pi$ radian phase shift if the variation is accurately centred on the quadrature point, or more generally of at least $2\pi$ to guarantee finding both a peak and a trough in an uncentred interference signal.

Because the receive interferometer is modulated to find turning points in the interference signal at which small changes in optical path difference at the vibration sensing optical cavity have little or no effect on the interference signal, the third approach may use a second receive interferometer to detect the frequency and/or phase of oscillations of the mechanical resonator 14.

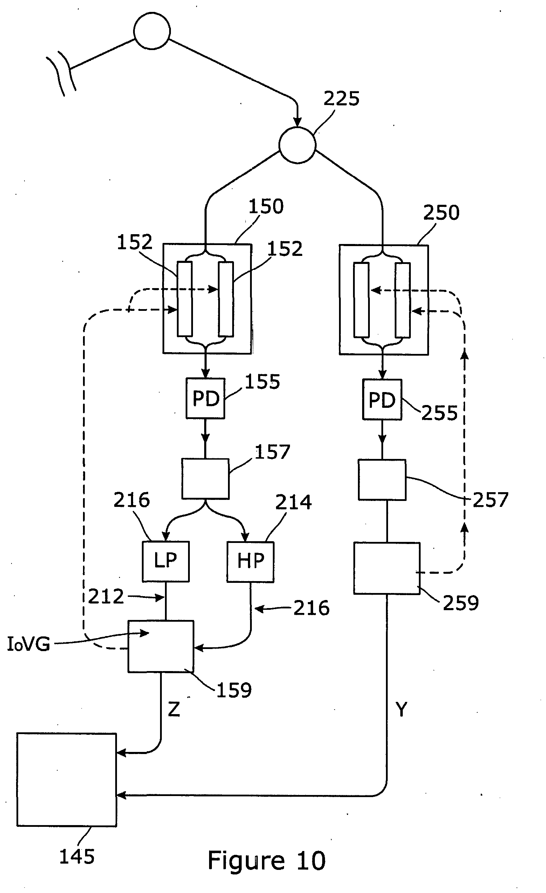

This third approach may be implemented using an arrangement as shown in figure 10, which shows a variation based on the corresponding parts of figure 4. The interferometer controller 159 is used to provide a repeated calibration sweep of the OPD of the receive interferometer 150 through a phase shift of at least $\pm\pi$ using the phase modulators 152, to ensure that both high and low turning points in the interference signal are detected (a phase shift of $\pm\pi/2$ is adequate if accurately centred on a quadrature point). The frequency of this calibration sweep is much lower than the frequency of oscillation of the mechanical resonator 14, so that the relatively small oscillations in the photo-detector signal due to the mechanical resonator 14 can be removed using a low pass filter 216, to leave a calibration sweep interference signal 212. Although in figure 10 the low pass filter 216 is shown as a discrete element between the amplifier 157 and the receive interferometer controller, it could be combined with another element such as the receive interferometer controller 159, the amplifier 157 or the analysis function 145.

Following the low pass filter 216, the calibration sweep interference signal 212 then appears as the cosine function of equation 11 in which the sweeping of the OPD of the receive interferometer 150 is represented by a sweeping of $\Phi_{DC}$, with the peak to peak range providing a current value for $I_0VG$ which can be assumed to be stable over at least multiple mechanical oscillator periods.

The current value for $I_0VG$ is then used in equation 11, for example by the receive interferometer controller 159, as a constant or calibration factor relating the photo-detector output to total phase shift. The quasi-DC effect, relative to the frequency of oscillation of the mechanical resonator, of the calibration sweep on the photo-detector signal is removed using a high pass filter 214 to yield a resonator interference signal 216. The amplitude of this resonator interference signal 216 varies with the calibration sweep, but the maximum amplitude will typically appear as the calibration sweep passes the quadrature point in the photo-detector output signal, and the current value of $I_0VG$ can then be used to translate this maximum amplitude or another amplitude value of the oscillations of the photo-detector signal into a signal Z representing the amplitude of oscillation of the mechanical resonator 14.

Figure 10 shows the high pass filtered resonator interference signal 216 as passed to the receive interferometer controller 159 where the amplitude of this signal is combined with $I_0VG$ to provide an output Z representative of the amplitude of oscillation of the mechanical resonator 14, but this processing step could instead be carried out in the analysis function 145 or elsewhere.

Because the amplitude of the resonator interference signal 216 fades as the calibration sweep approaches $\pm\pi/2$ radians from the quadrature point, it may not be suitable for rapid monitoring of the frequency and phase of oscillation of the mechanical resonator. As shown in figure 10, therefore, a second receive interferometer 250 may be provided in the detector function 120, with the probe light received from the transducer 10 being split by optical splitter 225 between the first receive interferometer 150 and the second receive interferometer 250. The second receive interferometer may also be a Mach Zehnder or other form of interferometer, as described in respect of the first receive interferometer. The second receive interferometer 250 in conjunction with a second photo-detector 255 and second amplifier 257, is then used to provide a signal Y which captures the oscillation frequency and/or phase of the mechanical resonator 14.

The peak to peak voltage or other amplitude measure of the waveform of signal Y may be monitored and the OPD of the second receive interferometer controlled by a second receive interferometer controller 259 in conjunction with one or more phase modulators 252 in the second receive interferometer 250 to keep the peak to peak voltage at a maximum, at or close to the quadrature point, thereby preventing phase drift in the system from extinguishing the signal. From the signal Y, both frequency and phase information of the resonator are available continuously and without interruption.

Although specific detailed embodiments of the invention have been described, the skilled person will appreciate that modifications and variations on these can be carried out without departing from the scope of the invention as defined by the appended claims.

**Claims**

1. A sensor (100) comprising:

   a transducer (10) comprising a mechanical resonator (14) arranged to exhibit a resonant frequency which is dependent upon one or more properties of a fluid (12), and a vibration sensing optical cavity (24) arranged to vary in optical path difference in correspondence with vibration of the mechanical resonator; and
   a resonator driver arranged to drive vibration of the mechanical resonator at or near the resonant frequency, **characterised in that** the sensor further comprises a detector (120) arranged to detect amplitude of vibration of the mechanical resonator, from optical interference caused by a combination of the vibration sensing optical cavity (24) and the detector (120) in light received at the detector from the transducer, and to detect the resonant frequency of the mechanical resonator from the same optical interference.

2. The sensor of claim 1 further comprising a diaphragm (16) arranged to be exposed to the fluid, the mechanical resonator (14) being coupled to the diaphragm so as to exhibit a resonant frequency which is dependent upon the one or more properties of the fluid.

3. The sensor of claim 1 or 2 wherein the detector (120) is arranged to generate an indication of said one or more properties of the fluid from the detected resonant frequency of the mechanical resonator, and wherein the one or more properties of the fluid optionally comprise pressure of the fluid (12).

4. The sensor of any of claims 1 to 3 arranged such that the resonator driver controls amplitude of vibration of the mechanical resonator responsive to the amplitude of vibration detected by the detector, optionally such that the amplitude of vibration remains constant.

5. The sensor of any of claims 1 to 3 wherein the detector (120) is arranged to compensate the indication of said one or more properties of the fluid generated from the detected resonant frequency of the resonator for changes in amplitude of vibration of the mechanical resonator detected by the detector.

6. The sensor of any of claims 1 to 5 wherein the detector (120) comprises:

   at least one receive interferometer (150) optically coupled to the vibration sensing optical cavity (24), and having an optical path difference matched to the optical path difference of the vibration sensing optical cavity such that said optical interference in light received at the detector is caused by a combination of said receive interferometer and said vibration sensing optical cavity; and
   a photo-detector (155) arranged to detect said optical interference and output a corresponding interference signal, the interference signal oscillating due to oscillations in the vibration sensing optical cavity which correspond to vibrations of the mechanical resonator.

7. The sensor of claim 6 wherein the detector (120) is arranged to control the resonator driver such that the amplitude of vibration of the mechanical resonator remains at a level where the interference signal oscillates in time between oppositely directed turning points of the signal, the oppositely directed turning points being of substantially equal signal value.

8. The sensor of claim 7 wherein the oppositely directed turning points of substantially equal signal value in the interference signal correspond to an amplitude of vibration of the vibration sensing optical cavity of one quarter of the wavelength of the light carrying the interference signal.

9. The sensor of claim 6 wherein the detector (120) is arranged to detect amplitude of vibration of the mechanical resonator using one or more combinations of a fundamental and/or higher harmonics of the frequency of vibration of the mechanical resonator present in the interference signal.

10. The sensor of claim 9 wherein the one or more combinations include a ratio of the fundamental and third vibration harmonics of the vibration of the mechanical resonator present in the interference signal, and/or the fundamental and/or harmonics of the frequency of vibration of the mechanical resonator present in the interference signal are found by expansion of the interference signal in terms of Bessel functions.

11. The sensor of claim 6 wherein the detector (120) is arranged to vary the optical path difference of the receive interferometer (150) to determine a maximum range of the interference signal under such variations, and to calibrate oscillations in the interference signal which are due to vibration of the mechanical resonator using the determined maximum range, to thereby detect amplitude of vibration of the mechanical resonator from the oscillations in the interference signal which are due to vibration of the mechanical resonator.

12. The sensor of claim 11 wherein the detector (120) is arranged to vary the optical path difference of the receive interferometer (150) to determine a maximum range of the interference signal under such variations by sweeping the receive interferometer across at least a peak and a trough in the interference signal.

13. The sensor of claim 11 or 12 wherein the detector further comprises:

> a second receive interferometer (250) also coupled to the vibration sensing optical cavity, and also having an optical path difference matched to the vibration sensing optical cavity; and
> a second photo-detector (255) arranged to detect and output a second interference signal caused by the optical coupling between the second receive interferometer and the amplitude sensing optical cavity, the second interference signal oscillating due to oscillations in the amplitude sensing optical cavity,
> the detector being arranged to detect phase and/or frequency of the oscillations in the amplitude sensing optical cavity from the second interference signal.

14. The sensor of any of claims 6 to 13 wherein the detector is arranged to one or more of: detect phase of the interference signal and to provide feedback control to the receive interferometer such that the interference signal is centred about a phase quadrature point; and detect the frequency and/or phase of vibration of the mechanical resonator from corresponding oscillations in the interference signal.

15. The sensor of any preceding claim wherein the transducer further comprises a temperature sensing optical cavity (26) arranged to vary in optical path difference in correspondence with changes in temperature of the transducer, wherein the temperature sensing optical cavity is optionally one or more of: defined by a static component of the sensor head; and provided by material of a substrate (15) of the transducer which comprises said mechanical resonator and said substrate.

16. A method of detecting one or more properties of a fluid using a transducer comprising a mechanical resonator arranged to exhibit a resonant frequency which is dependent upon the one or more properties, and a detector optically coupled to the transducer, the method comprising:

> providing at the transducer a vibration sensing optical cavity arranged to vary in optical path difference in correspondence with vibrations of the mechanical resonator;
> driving vibration of the mechanical resonator at or near the resonant frequency;
> detecting amplitude of vibration of the mechanical resonator, from optical interference caused by a combination of the vibration sensing optical cavity and the detector in light received at the detector from the transducer;
> detecting a vibration frequency of the mechanical resonator at the detector from the same optical interference; and
> providing an output of the one or more properties of the fluid based on the detected vibration frequency of the mechanical resonator.

**17.** The method of claim 16 further comprising one or more of: controlling the amplitude of the vibration of the mechanical resonator in accordance with the detected amplitude so as to reduce dependence of the output of the one or more properties of the fluid on the amplitude of vibration; and compensating the output of the one or more properties of the fluid using the detected amplitude of vibration.

**Patentansprüche**

**1.** Sensor (100), umfassend:

einen Transducer (10), umfassend einen mechanischen Resonator (14), welcher dazu eingerichtet ist, eine Resonanzfrequenz aufzuweisen, welche von einer oder mehreren Eigenschaften eines Fluids (12) abhängig ist, und einen eine Vibration erfassenden optischen Hohlraum (24), welcher dazu eingerichtet ist, in einer optischen Wegdifferenz im Einklang mit einer Vibration des mechanischen Resonators zu variieren; und
eine Resonator-Antriebseinheit, welche dazu eingerichtet ist, eine Vibration des mechanischen Resonators bei oder nahe zu der Resonanzfrequenz anzutreiben,
**dadurch gekennzeichnet, dass** der Sensor ferner einen Detektor (120) umfasst, welcher dazu eingerichtet ist, eine Amplitude einer Vibration des mechanischen Resonators von einer optischen Interferenz, welche durch eine Kombination des eine Vibration erfassenden optischen Hohlraums (24) und des Detektors (120) im Licht hervorgerufen wird, welches an dem Detektor von dem Transducer empfangen wird, und die Resonanzfrequenz des mechanischen Resonators von der gleichen optischen Interferenz zu erfassen.

**2.** Sensor nach Anspruch 1, ferner umfassend eine Membran (16), welche dazu eingerichtet ist, zu dem Fluid freigelegt zu sein, wobei der mechanische Resonator (14) mit der Membran gekoppelt ist, um eine Resonanzfrequenz aufzuweisen, welche von der einen oder den mehreren Eigenschaften des Fluids abhängig ist.

**3.** Sensor nach Anspruch 1 oder 2, wobei der Detektor (120) dazu eingerichtet ist, eine Anzeige der einen oder der mehreren Eigenschaften des Fluids von der erfassten Resonanzfrequenz des mechanischen Resonators zu erzeugen, und wobei die eine oder die mehreren Eigenschaften des Fluids optional einen Druck des Fluids (12) umfassen.

**4.** Sensor nach einem der Ansprüche 1 bis 3, welcher dazu eingerichtet ist, dass die Resonator-Antriebseinheit eine Amplitude der Vibration des mechanischen Resonators in Reaktion auf die Amplitude einer Vibration regelt/steuert, welche durch den Detektor erfasst worden ist, optional derart, dass die Amplitude einer Vibration konstant bleibt.

**5.** Sensor nach einem der Ansprüche 1 bis 3, wobei der Detektor (120) dazu eingerichtet ist, die Anzeige der einen oder der mehreren Eigenschaften des Fluids, welche von der erfassten Resonanzfrequenz des Resonators erzeugt worden ist, für Änderungen in einer Amplitude einer Vibration des mechanischen Resonators zu kompensieren, welche durch den Detektor erfasst worden ist.

**6.** Sensor nach einem der Ansprüche 1 bis 5, wobei der Detektor (120) umfasst:

wenigstens ein Empfangsinterferometer (150), welches optisch mit dem eine Vibration erfassenden optischen Hohlraum (24) gekoppelt ist, und welches eine optische Wegdifferenz aufweist, welche zu der optischen Wegdifferenz des eine Vibration erfassenden optischen Hohlraums derart passt, dass die optische Interferenz in Licht, welches an dem Detektor empfangen worden ist, durch eine Kombination des Empfangsinterferometers und des eine Vibration erfassenden optischen Hohlraums veranlasst wird; und
einen Fotodetektor (155), welcher dazu eingerichtet ist, die optische Interferenz zu erfassen und ein entsprechendes Interferenzsignal auszugeben, wobei das Interferenzsignal auf Grund von Oszillationen in dem eine Vibration erfassenden optischen Hohlraum oszilliert, welche Vibrationen des mechanischen Resonators entsprechen.

**7.** Sensor nach Anspruch 6, wobei der Detektor (120) dazu eingerichtet ist, die Resonator-Antriebseinheit derart zu regeln/steuern, dass die Amplitude einer Vibration des mechanischen Resonators bei einem Pegel verbleibt, zu welchem das Interferenzsignal in einer Zeit zwischen gegensätzlich gerichteten Wendepunkten des Signals oszilliert, wobei die gegensätzlich gerichteten Wendepunkte von im Wesentlichen gleichem Signalwert sind.

**8.** Sensor nach Anspruch 7, wobei die gegensätzlich gerichteten Wendepunkte von im Wesentlichen gleichem Signalwert in dem Interferenzsignal einer Amplitude einer Vibration des eine Vibration erfassenden optischen Hohlraums eines Viertels der Wellenlänge des Lichts, welches das Interferenzsignal trägt, entsprechen.

9. Sensor nach Anspruch 6, wobei der Detektor (120) dazu eingerichtet ist, eine Amplitude einer Vibration des mechanischen Resonators unter Verwendung einer oder mehrerer Kombinationen einer Grundschwingung und/oder höheren Harmonischen der Frequenz einer Vibration des mechanischen Resonators, welche in dem Interferenzsignal vorhanden ist, zu erfassen.

10. Sensor nach Anspruch 9, wobei die eine oder die mehreren Kombinationen ein Verhältnis der Grundschwingung und der dritten Vibrationsharmonischen der Vibration des mechanischen Resonators, welche in dem Interferenzsignal vorhanden ist, und/oder der Grundschwingung und/oder Harmonischen der Frequenz einer Vibration des mechanischen Resonators, welche in dem Interferenzsignal vorhanden sind/ist, durch Expansion des Interferenzsignals mittels Bessel-Funktionen gefunden werden.

11. Sensor nach Anspruch 6, wobei der Detektor (120) dazu eingerichtet ist, die optische Wegdifferenz des Empfangsinterferometers (150) zu variieren, um einen maximalen Bereich des Interferenzsignals unter derartigen Variationen zu bestimmen, und Oszillationen in dem Interferenzsignal zu kalibrieren, welche auf einer Vibration des mechanischen Resonators beruhen, unter Verwendung des bestimmten maximalen Bereichs, um dadurch eine Amplitude einer Vibration des mechanischen Resonators von den Oszillationen in dem Interferenzsignal zu erfassen, welche auf einer Vibration des mechanischen Resonators beruhen.

12. Sensor nach Anspruch 11, wobei der Detektor (120) dazu eingerichtet ist, die optische Wegdifferenz des Empfangsinterferometers (150) zu variieren, um einen maximalen Bereich des Interferenzsignals unter derartigen Variationen durch Abtasten des Empfangsinterferometers über wenigstens eine Spitze und eine Senke in dem Interferenzsignal zu bestimmen.

13. Sensor nach Anspruch 11 oder 12, wobei der Detektor ferner umfasst:

   ein zweites Empfangsinterferometer (250), welches auch mit dem eine Vibration erfassenden optischen Hohlraum gekoppelt ist und auch eine optische Wegdifferenz aufweist, welche zu dem eine Vibration erfassenden optischen Hohlraum passt; und
   einen zweiten Fotodetektor (255), welcher dazu eingerichtet ist, ein zweites Interferenzsignal zu erfassen und auszugeben, welches durch die optische Kopplung zwischen dem zweiten Empfangsinterferometer und dem eine Amplitude erfassenden optischen Hohlraum hervorgerufen wird, wobei das zweite Interferenzsignal auf Grund von Oszillationen in dem eine Amplitude erfassenden optischen Hohlraum oszilliert,
   wobei der Detektor dazu eingerichtet ist, eine Phase und/oder eine Frequenz der Oszillationen in dem eine Amplitude erfassenden optischen Hohlraum von dem zweiten Interferenzsignal zu erfassen.

14. Sensor nach einem der Ansprüche 6 bis 13, wobei der Detektor zu einem oder mehreren eingerichtet ist aus: Erfassen einer Phase des Interferenzsignals und eine Feedback-Regelung/Steuerung an das Empfangsinterferometer derart bereitzustellen, dass das Interferenzsignal um einen Phasen-Quadraturpunkt zentriert wird; und Erfassen der Frequenz und/oder der Phase einer Vibration des mechanischen Resonators von entsprechenden Oszillationen in dem Interferenzsignal.

15. Sensor nach einem der vorhergehenden Ansprüche, wobei der Transducer ferner einen eine Temperatur erfassenden optischen Hohlraum (26) umfasst, welcher dazu eingerichtet ist, in einer optischen Wegdifferenz im Einklang mit Änderungen in einer Temperatur des Transducers zu variieren, wobei der eine Temperatur erfassende optische Hohlraum optional eines oder mehrere ist aus: definiert durch eine statische Komponente des Sensorkopfs; und bereitgestellt durch Material eines Substrats (15) des Transducers, welcher den mechanischen Resonator und das Substrat umfasst.

16. Verfahren zum Erfassen einer oder mehrerer Eigenschaften eines Fluids unter Verwendung eines Transducers, umfassend einen mechanischen Resonator, welcher dazu eingerichtet ist, eine Resonanzfrequenz aufzuweisen, welche von der einen oder den mehreren Eigenschaften abhängig ist, und einen Detektor, welcher optisch mit dem Transducer gekoppelt ist, wobei das Verfahren umfasst:

   Bereitstellen eines eine Vibration erfassenden optischen Hohlraums an dem Transducer, welcher dazu eingerichtet ist, in einer optischen Wegdifferenz im Einklang mit Vibrationen des mechanischen Resonators zu variieren;

Antreiben einer Vibration des mechanischen Resonators bei oder nahe der Resonanzfrequenz;
Erfassen einer Amplitude einer Vibration des mechanischen Resonators von einer optischen Interferenz, welche durch eine Kombination des eine Vibration erfassenden optischen Hohlraums und des Detektors im Licht hervorgerufen wird, welches an dem Detektor von dem Transducer empfangen wird;
Erfassen einer Vibrationsfrequenz des mechanischen Resonators an dem Detektor von der gleichen optischen Interferenz; und
Bereitstellen einer Ausgabe der einen oder der mehreren Eigenschaften des Fluids auf Grundlage der erfassten Vibrationsfrequenz des mechanischen Resonators.

**17.** Verfahren nach Anspruch 16, ferner umfassend eines oder mehrere aus: Regeln/Steuern der Amplitude der Vibration des mechanischen Resonators im Einklang mit der erfassten Amplitude, um eine Abhängigkeit der Ausgabe der einen oder der mehreren Eigenschaften des Fluids von der Amplitude einer Vibration zu reduzieren; und Kompensieren der Ausgabe der einen oder der mehreren Eigenschaften des Fluids unter Verwendung der erfassten Amplitude einer Vibration.

**Revendications**

**1.** Capteur (100) comprenant :

un transducteur (10) comprenant un résonateur mécanique (14) agencé de manière à présenter une fréquence de résonance qui dépend d'une ou plusieurs propriétés d'un fluide (12), et une cavité optique de détection de vibrations (24) agencée de manière à varier en termes de différence de trajet optique en correspondance avec la vibration du résonateur mécanique; et
un circuit de commande de résonateur agencé de manière à commander la vibration du résonateur mécanique à la fréquence de résonance ou à une fréquence proche de celle-ci ;
**caractérisé en ce que** le capteur comprend en outre un détecteur (120) agencé de manière à détecter une amplitude de vibration du résonateur mécanique, à partir d'une interférence optique occasionnée par une combinaison de la cavité optique de détection de vibrations (24) et du détecteur (120), dans de la lumière reçue au niveau du détecteur en provenance du transducteur, et à détecter la fréquence de résonance du résonateur mécanique à partir de la même interférence optique.

**2.** Capteur selon la revendication 1, comprenant en outre une membrane (16) agencée de manière à être exposée au fluide, dans lequel le résonateur mécanique (14) est couplé à la membrane de manière à présenter une fréquence de résonance qui dépend de ladite une ou desdites plusieurs propriétés du fluide.

**3.** Capteur selon la revendication 1 ou 2, dans lequel le détecteur (120) est agencé de manière à générer une indication de ladite une ou desdites plusieurs propriétés du fluide à partir de la fréquence de résonance détectée du résonateur mécanique, et dans lequel ladite une ou lesdites plusieurs propriétés du fluide comprennent facultativement une pression du fluide (12).

**4.** Capteur selon l'une quelconque des revendications 1 à 3, agencé de sorte que le circuit de commande de résonateur commande l'amplitude de vibration du résonateur mécanique en réponse à l'amplitude de vibration détectée par le détecteur, facultativement de sorte que l'amplitude de vibration reste constante.

**5.** Capteur selon l'une quelconque des revendications 1 à 3, dans lequel le détecteur (120) est agencé de manière à compenser l'indication de ladite une ou desdites plusieurs propriétés du fluide, générée à partir de la fréquence de résonance détectée du résonateur, en ce qui concerne des variations d'amplitude de vibration du résonateur mécanique détectées par le détecteur.

**6.** Capteur selon l'une quelconque des revendications 1 à 5, dans lequel le détecteur (120) comprend :

au moins un interféromètre de réception (150) couplé optiquement à la cavité optique de détection de vibrations (24), et présentant une différence de trajet optique correspondant à la différence de trajet optique de la cavité optique de détection de vibrations, de sorte que ladite interférence optique dans la lumière reçue au niveau du détecteur est occasionnée par une combinaison dudit interféromètre de réception et de ladite cavité optique de détection de vibrations ; et
un photodétecteur (155) agencé de manière à détecter ladite interférence optique et à fournir en sortie un signal d'interférence correspondant, le signal d'interférence oscillant sous l'effet d'oscillations dans la cavité optique de détection de vibrations qui correspondent à des vibrations du résonateur mécanique.

7. Capteur selon la revendication 6, dans lequel le détecteur (120) est agencé de manière à commander le circuit de commande de résonateur de sorte que l'amplitude de vibration du résonateur mécanique reste à un niveau où le signal d'interférence oscille dans le temps entre des points de rotation orientés en sens inverse du signal, les points de rotation orientés en sens inverse présentant une valeur de signal sensiblement égale.

8. Capteur selon la revendication 7, dans lequel les points de rotation orientés en sens inverse de valeur de signal sensiblement égale dans le signal d'interférence correspondent à une amplitude de vibration de la cavité optique de détection de vibrations d'un quart de la longueur d'onde de la lumière portant le signal d'interférence.

9. Capteur selon la revendication 6, dans lequel le détecteur (120) est agencé de manière à détecter l'amplitude de vibration du résonateur mécanique en utilisant une ou plusieurs combinaisons d'harmoniques fondamentales et/ou supérieures de la fréquence de vibration du résonateur mécanique présentent dans le signal d'interférence.

10. Capteur selon la revendication 9, dans lequel ladite une ou lesdites plusieurs combinaisons incluent un rapport des harmoniques fondamentales et des troisièmes harmoniques de vibration de la vibration du résonateur mécanique présentent dans le signal d'interférence, et/ou les harmoniques fondamentales et/ou des harmoniques de la fréquence de vibration du résonateur mécanique présentent dans le signal d'interférence sont obtenues par l'expansion du signal d'interférence en termes de fonctions de Bessel.

11. Capteur selon la revendication 6, dans lequel le détecteur (120) est agencé de manière à faire varier la différence de trajet optique de l'interféromètre de réception (150) en vue de déterminer une plage maximale du signal d'interférence sous de telles variations, et à étalonner des oscillations du signal d'interférence qui sont dues à la vibration du résonateur mécanique en utilisant la plage maximale déterminée, en vue de détecter par conséquent une amplitude de vibration du résonateur mécanique à partir des oscillations du signal d'interférence qui sont dues à la vibration du résonateur mécanique.

12. Capteur selon la revendication 11, dans lequel le détecteur (120) est agencé de manière à faire varier la différence de trajet optique de l'interféromètre de réception (150) en vue de déterminer une plage maximale du signal d'interférence sous de telles variations, en balayant l'interféromètre de réception à travers au moins un pic et un creux du signal d'interférence.

13. Capteur selon la revendication 11 ou 12, dans lequel le détecteur comprend en outre :

   un second interféromètre de réception (250) également couplé à la cavité optique de détection de vibrations, et présentant également une différence de trajet optique correspondant à la cavité optique de détection de vibrations; et
   un second photodétecteur (255) agencé de manière à détecter et à fournir en sortie un second signal d'interférence occasionné par le couplage optique entre le second interféromètre de réception et la cavité optique de détection d'amplitude, le second signal d'interférence oscillant sous l'effet d'oscillations dans la cavité optique de détection d'amplitude ;
   le détecteur étant agencé de manière à détecter la phase et/ou la fréquence des oscillations dans la cavité optique de détection d'amplitude à partir du second signal d'interférence.

14. Capteur selon l'une quelconque des revendications 6 à 13, dans lequel le détecteur est agencé de manière à mettre en oeuvre une ou plusieurs des étapes ci-après consistant à : détecter la phase du signal d'interférence et fournir une commande de rétroaction à l'interféromètre de réception, de sorte que le signal d'interférence est centré autour d'un point de quadrature de phase ; et détecter la fréquence et/ou la phase de vibration du résonateur mécanique à partir d'oscillations correspondantes dans le signal d'interférence.

15. Capteur selon l'une quelconque des revendications précédentes, dans lequel le transducteur comprend en outre une cavité optique de détection de température (26) agencée de manière à varier en termes de différence de trajet optique en correspondance avec des variations de température du transducteur, dans lequel la cavité optique de détection de température est facultativement : soit définie par un composant statique de la tête de capteur ; et/ou soit fournie par un matériau d'un substrat (15) du transducteur qui comporte ledit résonateur mécanique et ledit substrat.

**16.** Procédé de détection d'une ou plusieurs propriétés d'un fluide à l'aide d'un transducteur comprenant un résonateur mécanique agencé de manière à présenter une fréquence de résonance qui dépend de ladite une ou desdites propriétés, et un détecteur couplé optiquement au transducteur, le procédé comprenant les étapes ci-dessous consistant à :

fournir, au niveau du transducteur, une cavité optique de détection de vibrations agencée de manière varier en termes de différence de trajet optique en correspondance avec les vibrations du résonateur mécanique ;
commander la vibration du résonateur mécanique à la fréquence de résonance ou à une fréquence proche de celle-ci;
détecter une amplitude de vibration du résonateur mécanique, à partir d'une interférence optique occasionnée par une combinaison de la cavité optique de détection de vibrations et du détecteur, dans de la lumière reçue au niveau du détecteur en provenance du transducteur ;
détecter une fréquence de vibration du résonateur mécanique au niveau du détecteur, à partir de la même interférence optique ; et
fournir une sortie de ladite une ou desdites plusieurs propriétés du fluide sur la base de la fréquence de vibration détectée du résonateur mécanique.

**17.** Procédé selon la revendication 16, comprenant en outre une ou plusieurs des étapes ci-après consistant à : commander l'amplitude de la vibration du résonateur mécanique conformément à l'amplitude détectée, de manière à réduire une dépendance de la sortie de ladite une ou desdites plusieurs propriétés du fluide par rapport à l'amplitude de vibration ; et compenser la sortie de ladite une ou desdites plusieurs propriétés du fluide en utilisant l'amplitude de vibration détectée.

Figure 1

Figure 2

Figure 3

Figure 4

Figure 5

Figure 6

Figure 7

## Phase shift $\phi_{DC}=\pi/2$, 1st and 3rd harmonics

Figure 8a

## Phase shift $\phi_{DC}=0$, 2nd and 4th harmonics

Figure 8b

Figure 9

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5195374 A
- WO 9829722 A
- US 20110107838 A
- GB 2470399 A
- US 4972076 A
- US 5442963 A
- EP 0371592 A
- GB 1204673 A
- WO 9022775 A
- WO 9960341 A
- WO 2012140411 A

### Non-patent literature cited in the description

- **VENKATESH ; CULSHAW.** *Electronics Letters,* 1985, vol. 21 (8
- **PALIT et al.** Proceedings of the 37th workshop on geothermal reservoir engineering. Stanford University, 01 February 2012
- **LIU ; FERNANDO.** A frequency division multiplexed low-finesse fibre optic Fabry-Perot sensor system for strain and displacement measurements. *Rev. Sci. Instrum.,* 2000, vol. 71 (3
- **ZHENGUO ; QINGXU.** *Proceedings of the sixth International Symposium on Test and Measurement,* 01 June 2004, vol. 4, 3509
- **RAO ; JACKSON.** *Meas. Sci. Technol.,* 1996, vol. 7, 981
- **CLARK et al.** Thermo-Optic Phase Modulators in SIMOX Material. *Integrated Optics Devices IV, Proceedings of SPIE,* 2000, vol. 3936, 16
- **OHTSUKA.** Dynamic displacements of small displacements by laser interferometry. *Trans. Inst. Meas. Contr.,* 1982, vol. 4, 115
- **SUDARSHANAM ; SRINIVASAN.** Linear readout of dynamic phase change in a fiber optic heterodyne interferometer. *Optics Letters,* 1989, vol. 14, 140